# EUROPEAN PATENT SPECIFICATION

(11) **EP 3 650 691 B1**
(45) Date of publication and mention of the grant of the patent: **22.02.2023**
(21) Application number: 18204789.4
(22) Date of filing: 07.11.2018
(51) Int. Cl.: F03G 7/06

(54) **ACTUATOR DEVICE USING SHAPE MEMORY ALLOY ELEMENT**
BETÄTIGUNGSVORRICHTUNG MIT EINEM FORMGEDÄCHTNISLEGIERUNGSELEMENT
DISPOSITIF D'ACTIONNEUR UTILISANT UN ÉLÉMENT EN ALLIAGE À MÉMOIRE DE FORME

(43) Date of publication of application: 13.05.2020
(73) Proprietor: L&P Property Management Company, South Gate, CA 90280 (US)
(72) Inventor: Samain, Maxime, 8530 Harelbeke (BE); Nicola, Stefano, Windsor, Ontario N8P 1X7 (CA)
(74) Representative: Neusser, Sebastian

(56) References cited:
- EP-A2- 1 045 141
- DE-A1-102013 216 655
- US-A1- 2013 227 943

## Description

### TECHNICAL FIELD

Various embodiments generally relate to an actuator device having an actuation member that is configured to displace, to thereby actuate a load. More specifically, various embodiments relate to an actuator device that employs a shape memory alloy element configured to transition between an expanded state and a contracted state, to thereby displace the actuation member.

### BACKGROUND

Actuator devices are employed in various use cases, such as in automotive applications. For example, actuator devices can be used to facilitate folding of seats, adjusting of seating positions, actuation of doors or locks, etc..

Recently, actuator devices have been implemented that employ shape memory alloy (SMA) elements. Here, upon thermal activation and deactivation, the SMA element transitions between an expanded state and a contracted state. The overall length change (stroke) of the SMA element is used to displace an actuation member of the actuator device. The actuation member can be coupled to an external load. Such actuator devices are disclosed for example in EP 1 045 141 A2, US 2013/0227943 A1 or DE 10 2013 216 655 A1.

In certain reference implementations of such actuator devices employing SMA elements, a temperature stability of the operation can be challenging, in particular in automotive scenarios where full functionality is required across a temperature range of -40 to +80C . Furthermore, the energy efficiency can be low, e.g., where heating or cooling is required permanently.

### SUMMARY

Therefore, a need exists for actuator devices that overcome or mitigate at least some of the above-mentioned limitations and drawbacks.

This need is met by the features of the independent claims. The features of the dependent claims define embodiments.

According to claim 1, an actuator device includes an SMA element. The SMA element is configured to transition between an expanded state and a contracted state. The actuator device also includes an actuation member which is coupled to the SMA element. By means of the coupling, the actuation member can displace between a first position and the second position, when the SMA element transitions between the expanded state and the contracted state. The actuator device also includes an elastic element. The elastic element is configured to bias the SMA element towards the expanded state. Further, the actuator device includes a locking element. The locking element is configured to selectively lock the actuation member in the first position when the SMA element is in the expanded state.

Thus, the first position of the actuation member may be associated with the expanded state of the SMA element; and the second position of the actuation member may be associated with the contracted state of the SMA element.

Selectively locking can correspond to locking if and as long the SMA element is in the expanded state. Thus, in other words, when the SMA element is in the contracted state, the locking element may be configured to not lock the actuation member. Thus, the locking may be released prior to or upon transitioning the SMA element from the expanded state to the contracted state.

Further, the actuation member is coupled with a first end of the SMA element and the locking element is coupled with a second end of the SMA element, such that the SMA element is arranged to release the locking of the locking element upon a transition of the SMA element from the expanded state towards the contracted state.

The actuator device can include an electric power supply to selective provide a current flow through the SMA element. Thereby, heating of the SMA element is achieved. Alternatively or additionally, the actuator device can include a heat source to provide heat to an exterior of the SMA element.

According to claim 12, a method of operating an actuator device having an actuation member displaced by a SMA element when the SMA element transitions between an expanded state and a contracted state includes operating the SMA element in the expanded state. The method also includes locking the actuation member with a locking element when the SMA element is operated in the expanded state. The method also includes releasing the locking of the actuation member by unlocking the locking element and, upon releasing of the locking of the actuation member, transitioning the SMA element from the expanded state to the contracted state. The method also includes biasing the SMA element towards the expanded state using an elastic element, wherein the actuation member is coupled with a first end of the SMA element and the locking element is coupled with a second end of the SMA element, such that the SMA element releases the locking of the locking element upon a transition of the SMA element from the expanded state towards the contracted state.

For example, the method may be executed by the actuator device as described above.

### BRIEF DESCRIPTION OF THE DRAWINGS

FIG. 1 schematically illustrates an actuator device according to an embodiment.
FIG. 2 schematically illustrates the stress-strain characteristics of an SMA element according to an embodiment.
FIG. 3 schematically illustrates aspects with respect to a locking mechanism according to an embodiment, wherein FIG. 3 illustrates the locking mechanism in a locked state.
FIG. 4 schematically illustrates aspects with respect to the locking mechanism according to the embodiment of FIG. 3, wherein FIG. 4 illustrates the locking mechanism in an unlocked state.
FIG. 5 schematically illustrates aspects with respect to a locking mechanism according to an embodiment, were in FIG. 5 illustrates the locking mechanism in the locked state.
FIG. 6 schematically illustrates aspects with respect to the locking mechanism according to the embodiment of FIG. 5, were in FIG. 6 illustrates the locking mechanism in the unlocked state.
FIG. 7 is a flowchart of a method according to an embodiment.
FIG. 8 schematically illustrates an SMA element according to an embodiment.
FIG. 9 is a top view of an example implementation of an actuator device according to an embodiment, wherein in the scenario of FIG. 9 the actuation member of the actuator device is in a first position.
FIG. 10 is a top view of the example implementation of the actuator device according to the example of FIG. 9, wherein in the scenario fig. 10 the actuation member of the actuator devices in a second position.
FIG. 11 is a bottom view of the example implementation of the actuator device according to the example of FIG. 9, wherein in the scenario fig. 11 the actuation member of the actuator device is in the first position.
FIG. 12 is a bottom view of the example implementation of the actuator device according to the example of FIG. 9, wherein in the scenario of FIG. 12 the actuation member of the actuator device is in the second position.
FIG. 13 is a perspective view of the actuator device according to the example of FIG. 9.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of actuating a load are described. For this, the load can be displaced. An actuator device is provided which includes an actuation member - to give a few examples, the actuation member may be implemented by a rack, to provide linear motion; or may be implemented by a lever or pulley, to provide a rotational motion. A stroke is defined as the length of the path covered by the actuation member. For example, strokes in the range of 10 mm to 20 mm can be implemented. The actuation member is coupled to the load; thereby, a displacement of the actuation member results in a displacement of the load.

Such actuator devices as described throughout this disclosure can be employed in various use cases. Example use cases include automotive applications such as release of a locking mechanism of a seat back, such that the seatback can fold; or a so-called door-handle presenter where the door handle of a car is pushed outwards towards a person attempting to enter the car, e.g., upon the car being unlocked.

According to various examples, a displacement of the actuation member is achieved by using an SMA element. To give a few non-limiting examples, the SMA element may be in the form of an SMA wire or an SMA belt or multiple parallel SMA wires or belts. The SMA element may provide a length change depending on its temperature. For example, an SMA element can be configured to reversibly change its length due to thermal activation between an expanded state and a contracted state. The elongation is referred to as strain. Upon thermal activation, i.e., heating, the SMA element typically transitions from the expanded state to the contracted state. The SMA element may provide such a length change due to phase transformation between two or more solid-state phases. Typically, the transformation is between a low-temperature phase / martensitic phase to a high-temperature phase / austenitic phase. Typically, the phase transformation is reversible and independent of time. According to various examples, the SMA element can employ the so-called extrinsic two-way effect. Here, the SMA element can be continuously held under a mechanical bias, e.g., at least partly provided by an elastic element and also by the way of mounting the SMA element at a housing. For instance, a biasing system comprising one or more adjustable screws etc. may be provided. For example, heating the SMA element typically results in contraction and, thereby, displacement of the actuation member. The contraction is typically related to the phase transformation, e.g., from de-twinned martensitic to austenitic in some SMA materials. In some examples, a pseudo-plastic deformation may result where the extension of the SMA material is from austenitic to de-twinned martensitic directly, i.e., not via twinned martensitic.

As a general rule, various materials are available for implementing the SMA element, including, but not limited to: CoAlNi alloys, NiTi alloys, or other alloys including zinc, copper, gold or iron. Further examples include FeMnSi, CuZnAl, CuAlNi, etc.. Generally, by appropriately setting the material composition and/or the shape, the stress-strain characteristic of the SMA element can be tailored.

As a general rule, thermal activation of SMA elements may be achieved by external heating, i.e., by placing a heating element in the vicinity of the respective SMA element. Alternatively or additionally, it would also be possible to provide intrinsic heating, e.g., by current flow through the respective SMA element. Hence, it is possible to activate the SMA element by feeding a heating current to the SMA material. Due to the current flow, the SMA material is heated. The change in temperature causes the length change, typically a transition from the expanded state to the contracted state. In other examples, external heating elements arranged adjacent to the SMA element could be employed, e.g., separate current-carrying wires or another heat source, etc..

As mentioned above, typically, upon heating the SMA element, due to the so-called extrinsic effect, there is a transition of the SMA element from the expanded state to the contracted state. Then, upon lowering of the temperature, the SMA element is to be returned to the expanded state. According to various examples, this is achieved by using a biasing member. The biasing member may be implemented by an elastic element. The elastic element is configured to bias the SMA element towards the expanded state.

As will be appreciated, if the ambient temperature increases, there is a tendency for the SMA element to transition to the contracted state - this can result in unintentional actuation of the load. To avoid such unintentional actuation of the load, in reference implementations, the biasing force provided by the elastic element is dimensioned sufficiently large. For example, sometimes the elastic element - being itself implemented by a further SMA element - may be continuously heated, to provide the sufficiently large biasing force. Thus, there is a tendency that the elastic element will be operated at high stresses, to provide sufficient headroom against possible rise of the ambient temperature. Various techniques are based on the finding that in such a scenario the SMA element - when transitioning from the expanded state to the contracted state, to actuate the load - will have to overcome a significant biasing force including the above-mentioned headroom. This can require costly and bulky SMA elements. Also, where the elastic element configured to provide the biasing force is continuously heated, power consumption is large.

According to various examples, temperature stability is achieved without having to provision significant headroom in terms of stress of the elastic element. According to various examples, this is achieved by the actuator device including a locking element. The locking element is configured to selectively lock the actuation member when the SMA element is in the expanded state. Hence, the locking element is configured to selectively provide a strain relief to the elastic element when the SMA element is in the expanded state. Unintentional displacement of the actuation member can thereby be avoided. Also, the elastic element - when implemented as a further SMA element - is not required to be continuously heated due to the strain relief. A complete cooldown of the SMA element and the elastic element is possible.

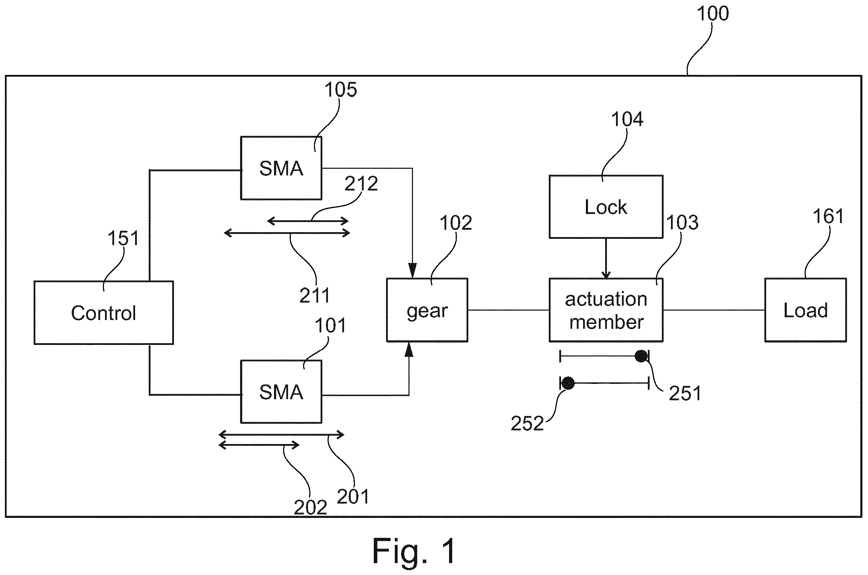

FIG. 1 is a schematic illustration of an actuator device 100 according to an embodiment. The actuator device is coupled to an external load 161. For example, the actuator device 100 may displace the load 161.

Specifically, the actuator device 100 is coupled to the load 161 via an actuation member 103, e.g. in the example of FIG. 1, a rack or piston, etc.. The actuation member 103 is configured to displace between a first position 251 and a second position 252, to thereby displace the load 161. The first position 251 may be referred to as home position and the second position 252 may be referred to as end-of-travel position.

To displace the actuation member 103 between the first position 251 and the second position 252, there is provided an SMA element 101, e.g., including two or four SMA belts arranged in a plane. The SMA element 101 is configured to transition between a an expanded state 201 and a contracted state 202. To trigger this transition, a control unit 151 is provided.

For example, the control unit 151 can be implemented as an application-specific integrated circuit (ASIC) or as a field programmable gate array (FPGA). The control unit 151 could also be implemented as a microcontroller. Certain functions of the control unit 151 can be implemented in hardware and/or software. The control unit 151 can be implemented at least in parts by using analog circuitry, e.g., a limit switch etc..

For example, one function of the control unit 151 can control thermal activation of the SMA element 101. For this, a current flow through the SMA element 101 may be triggered according to various examples. Such thermal activation results in a transition of the SMA element 101 from the expanded state 201 towards the contracted state 202, once the temperature of the material of the SMA element 101 exceeds a activation temperature.

Then, the length change of the SMA element 101 results in the displacement of the actuation member 103 from the first position 251 (corresponding to the expanded state 201 of the SMA element 101) towards the second position 252 (corresponding to the contracted state 202 of the SMA element 101).

As illustrated in FIG. 1, it is possible, but not necessary, to provide a gear 102 that translates the stroke of the SMA element 101 into a - typically larger - stroke of the actuation member 103. Various implementations are conceivable for the gear 102. For instance, the gear 102 may be implemented by a lever arm.

While in the scenario of FIG. 1 there is a separate actuation member 103 and gear 102, in other scenarios it would be possible to implement the actuation member 103 with gear functionality. For example, in such a scenario the SMA element 101 may be coupled to a lever arm or pulley that implements the actuation member 103 and is coupled to the load 161.

To return the SMA element 101 from the contracted state 202 to the expanded state 201 ("return-to-home"), it is typically not only sufficient to remove the thermal activation, i.e., to stop heating. Rather, it is typically required to exert a biasing force onto the SMA element 101. In this regard, the actuator device 100 also includes an elastic element 105 that is configured to bias the SMA element 101 towards the expanded state 201.

As a general rule, various implementations of the elastic element 105 are conceivable. For example, the elastic element 105 may be implemented as a spring, e.g., as a leaf spring or a compression spring. For example, the elastic element 105 may itself be implemented by a further SMA element. Hereinafter, a scenario will be described in which the elastic element 105 is implemented by a further SMA element. However, it should be understood that other scenarios are conceivable.

As illustrated in FIG. 1, the control unit 151 is also connected to the further SMA element 105. For example, the control unit 151 can control thermal activation of the further SMA element 105. Here, thermal activation of the SMA element 101 and of the further SMA element 105 may be controlled in a complementary manner: i.e., when the SMA element 101 is thermally activated, the further SMA element 105 may not be thermally activated, and vice versa. Thus, more generally, the SMA element 101 and the further SMA element 105 may be arranged and controlled as antagonistic wires. Specifically, this may refer to a scenario in which the SMA element 101 and the further SMA element 105 are alternatingly heated: i.e., between each two phases of only heating the SMA element 101, there is at least a brief phase of only heating the further SMA element 105.

As will be appreciated, in such a scenario, the further SMA element 105 provides a biasing force to the SMA element 101, to return the SMA element 101 into the expanded state 201. For this, the further SMA element 105 can itself be transition from its expanded state 211 to its contracted state 212. In such a set up, it may be helpful to operate the further SMA element 105 in a pseudo-elastic regime.

The pseudo-elastic regime typically occurs at temperatures above the Austenite finish (Af) temperature.. At room temperature, the material of the further SMA element 105 may be in the austenitic phase Where stress is applied, the austenitic atomic grid deforms and a directly stress-induced detwinned martensite grid arises. Operation of the further SMA element 105 in the pseudo-elastic regime has the advantage that, upon stress-relief (e.g., when stopping thermal activation of the SMA element 101), the further SMA element 105 automatically returns to the contracted state 212. Typically, the pseudo-elastic regime is restricted to a relatively small temperature range, e.g., a sub-range of the nominal operational range from -40°C to +80°C. Therefore, to ensure that the SMA element 101 returns to the expanded state 201 over the entire nominal operational range, it is possible to provide additional thermal activation to the further SMA element 105. Thereby, "return-to-home" can be facilitated for a wide range of ambient temperatures, even if the further SMA element 105 does not operate in the pseudo-elastic regime.

As a general rule, it would be possible to implement the control unit 151 using digital logic and/or analog circuitry. For instance, in some examples, the current flow through the SMA element 101 may be controlled using a limit switch that deactivates the current flow once the contracted state 202 is reached. In some examples, a bi-stable switch may be employed that selectively directs the current flow through the SMA element 101 and the further SMA element 105. Thereby, an antagonistic operation of the SMA element 101 and the further SMA element 105 can be achieved, using alternating heating phases for the SMA element 101 and the further SMA element 105.

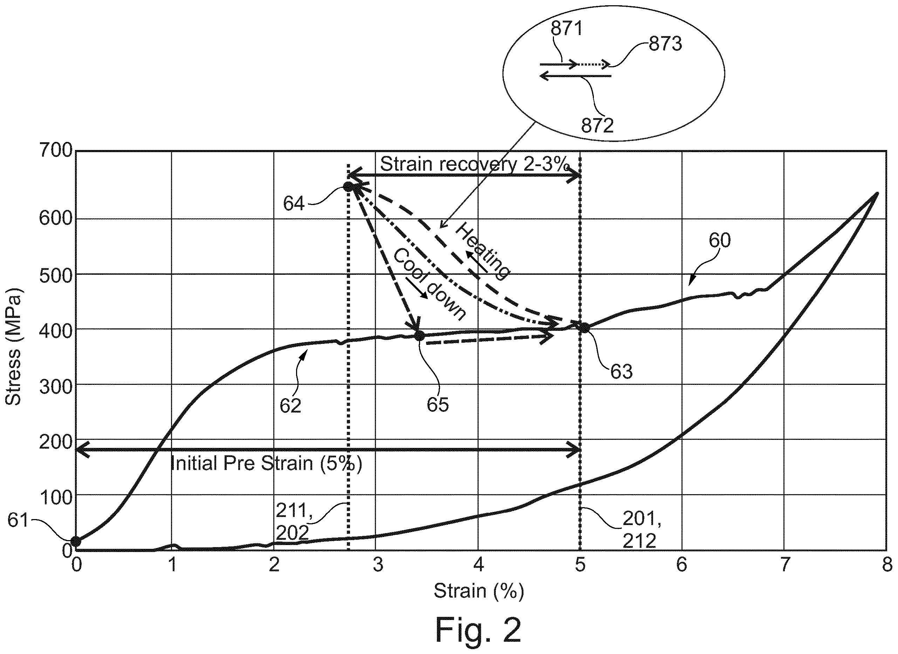

FIG. 2 illustrates the stress-strain characteristics 60 of the SMA element 101 according to an embodiment. The SMA element 101 is operated according to the extrinsic two-way effect.

As illustrated in FIG. 2, the SMA element 101 is pre-strained to approximately 5% strain, by appropriately arranging the SMA element 101 in the actuator device 100. Initially, without pre-strain the, the SMA element 101 is at zero stress and zero strain, position 61. Then, the pre-strain transitions the SMA element 101 to position 63. Typically, at position 63, the initially (at position 61) un-oriented martensite is de-twinned. As illustrated in FIG. 2, the position 63 is within a plateau region 62 of the stress-strain characteristics 60. The plateau region 62 of the SMA element 101, in the example of FIG. 2, is at a stress level of 300 MPa to 400 MPa at +80°C.

Then, the SMA element 101 is heated. This triggers a phase transformation to the austenite structure. The SMA element 101 transitions from the expanded state 201 to the contracted state 202 (also cf. FIG. 1). In other words, the SMA element 101 recovers from strain due to heating. This is at position 64 of the stress-strain characteristics 60.

When the SMA element 101 is in the expanded state 201, the further SMA element 105 is in the contracted state 212. When the SMA element 101 is in the contracted state 202, the further SMA element 105 is in the expanded state 211.

Then, upon cool-down of the SMA element 101, the SMA element 101 transitions from the contracted state 202 back to the expanded state 201. Due to the biasing force provided by the further SMA element 105, this transition is typically not through a position 65 (dashed-dotted line), but rather directly to position 63, i.e., the de-twinned martensitic (dashed-dotted-dotted line). This may be illustratively labeled "return-to-home". It is noted that the position 65 can lay anywhere between positions 61 and 63, depending on the stress imparted on the SMA element 101.

The further SMA element 105 can be configured to selectively provide a large biasing force to return the SMA element 101 to position 63, when starting from position 64; i.e., to return the SMA element 101 to the expanded state 201 from the contracted state 202 (return-to-home). Specifically, the further SMA element 105 can be configured to provide a small biasing force onto the actuation member 103 and the SMA element 101 while the SMA element 101 is transitioning from the expanded state 201 to the contracted state 202; and provide a large biasing force onto the actuation member 103 and the SMA element 101 while the SMA element 101 is transitioning from the contracted state 202 to the expanded state 201. Such selective dimensioning of the biasing force can be achieved by selective heating / cool-down of the further SMA element 105.

By providing such an on-demand biasing force, the headroom for operating the load 161 by the SMA element 101 can be increased: the SMA element 101 does not need to overcome a strong biasing force of the further SMA element 105 when transitioning from the expanded state 201 to the contracted state 202.

The further SMA element 105 is not heated while the SMA element 101 transitions from the expanded state 201 to the contracted state 202 (by heating the SMA element 101); but the further SMA element 105 is heated when the SMA element 101 transitions from the contracted state 202 to the expanded state 201 (by not heating the SMA element 101). In other words, the control unit 151 is configured to alternatingly heat the SMA element 101 and the further SMA element 105. The comparably small biasing force provided by the further SMA element 105 while the SMA element 101 transitions from the expanded state 201 to the contracted state 202 can correspond to the stress at which the further SMA element 105 is operated according to the stress-strain characteristics thereof (not illustrated in fig. 2).

Specifically, it would be possible that the further SMA element 105 is also pre-strained to operate at the plateau region 62 of its stress-strain characteristic. The plateau region 62 of the further SMA element 105 can be at a stress level of 200 MPa to 300 MPa at room temperature or at 300 MPa to 400 MPa at temperatures in the range of 70°C to 90°C.

The (i) biasing force 871 exerted by the further SMA element 105 onto the actuation member 103without thermal activation of the further SMA element 105 can be smaller than the (ii) biasing force 872 exerted by the SMA element 101 onto the actuation member 103 with thermal activation of the SMA element 101. The biasing force 871 may be opposed to the biasing force 872 (cf. inset of FIG. 2). For example, the (i) biasing force 871 exerted by the further SMA element 105 without thermal activation of the further SMA element 105 can be 80% or less if compared to (ii) the biasing force 872 exerted by the SMA element 101 with thermal activation of the SMA element 101. Thus, the SMA element 101 can contract without having to overcome a large biasing force 871 of the further SMA element 105. This provides for additional headroom 873 to actuate the load 161.

There are various design options to achieve this. For example, the material volume of the further SMA element 105 can be dimensioned smaller than the material volume of the SMA element 101. Thermal treatment of the material of the SMA element 101 and the further SMA element 105 can induce different material properties. For example, it would be possible that the plateau region 62 of the stress-strain characteristics of the further SMA element 105 is at a stress level which is not larger than 80% of the stress level of the plateau region 62 of the stress-strain characteristics of the SMA element 101, optionally not larger than 70%, further optionally not larger than 70%. In other words, the plateau region 62 of the stress-strain characteristics of the further SMA element 105 can be at the stress level that is not larger than 80% of the stress level associated with position 63. Thereby, the biasing force that needs to be overcome by the SMA element 101 when transitioning from the expanded state 201 to the contracted state 202 is comparably small.

Specifically, the biasing force that needs to be overcome by the SMA element 101 when transitioning from the expanded state 201 to the contracted state 202 can be smaller for the scenario where the elastic element is implemented by a further SMA element 105 if compared to a scenario where the elastic element is implemented, e.g., by a leaf spring or compression spring. Specifically, in such a scenario employing a leaf spring or a compression spring, it is not possible to tailor the biasing force to take different values on-demand, i.e., while the SMA element 101 transitions from the expanded state 201 to the contracted state 202 and while the SMA element 101 transitions from the contracted state 202 to the expanded state 201. Rather, such springs provide a fixed biasing force profile and there is no possibility to tailor the load induced by the spring.

To provide for temperature stability, a locking element 104 is provided (cf. FIG. 1). The locking element 104 is configured to selectively lock the actuation member 103 in the first position 251 when the SMA element 101 is in the expanded state 201. I.e., the locking element 104 is in a locked state when the SMA element 101 is in the expanded state 201.

Thereby the system is effectively kept at equilibrium, and any unintended displacement is prevented across the full temperature range (-40 to +80C), as long as the locking element is in the locked state. Also, a stress relief is provided to the further SMA element 105 when the locking element 104 is in the locked state. A cool-down of the SMA element 105 in the contracted state can be implemented, reducing power consumption.

As a general rule, there are various implementations conceivable for the locking element. For example, an electromechanical relay could be used to provide selective engagement. A coil could be used to generate a magnetic field that locks down the SMA element 101. Some further examples are explained in connection with the following FIGs.

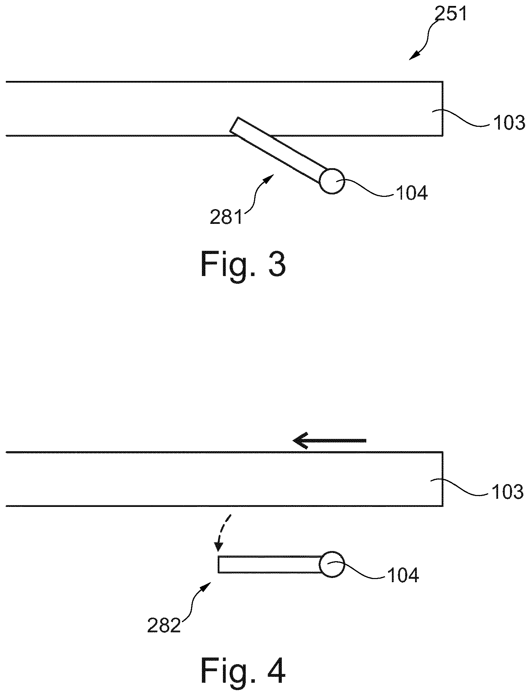

FIG. 3 schematically illustrates aspects with respect to the locking element 104. FIG. 3 illustrates an implementation of the locking element 104 as a lever arm that can engage or disengage (selectively engage) with the actuation member 103. For illustrative purposes, the actuation member 103 is illustrated as a rod or rack in the scenario of FIG. 3; generally, it would be possible to implement the actuation member 103 in a different manner.

FIG. 3 illustrates the locking element 104 in the locked state 281. In the locked state 281, the locking element 104 engages with the actuation member 103. Typically, the locked state 281 can be synchronized with the SMA element 101 being in the expanded state 201. Likewise, the locked state 281 can be synchronized with the further SMA element 105 being in the contracted state 212. Thus, the locked state 281 corresponds to the actuation member 103 being in the first position 251.

FIG. 4 schematically illustrates aspects with respect to the locking element 104. The scenario of FIG. 4 generally corresponds to the scenario of FIG. 3. However, in the scenario of FIG. 4, the locking element 104 is disengaged from the actuation member 103. Thus, the locking element 104 is in an unlocked state 282. Specifically, in the illustrated implementation, the lever arm implementing the locking element 104 has rotated away from the rack implementing the actuation member 103. Then, the actuation member 103 can move towards the second position 252 (illustrated by the arrow in FIG. 4).

As a general rule, various scenarios are conceivable for transitioning the locking element 104 between the locked state 281 and the unlocked state 282. For instance, it would be possible that the actuator device 100 includes an actuator module (not illustrated in the FIGs.) that is configured to operate the locking element to selectively lock the actuation member 103. For instance, the actuator module may be coupled with the control unit 151. Then, in preparation of transitioning the SMA element 101 from the expanded state 201 towards the contracted state 202, it would be possible to release the locking of the actuation member 103.

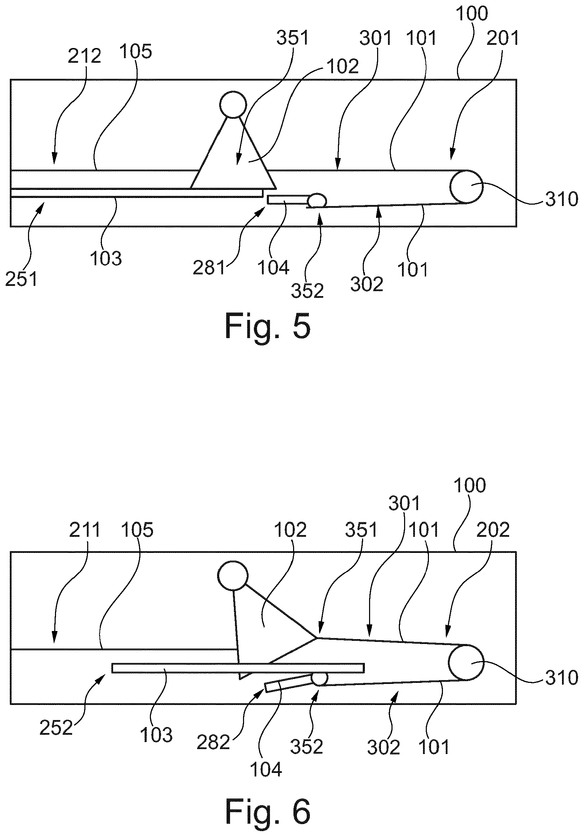

Yet a further example of transitioning the locking element 104 between the locked state 281 and the unlocked state 282 is illustrated in connection with FIG. 5 and FIG. 6.

FIG. 5 schematically illustrates aspects with respect to the locking element 104. Also in the scenario of FIG. 5, the locking element 104 is implemented as a lever arm that can engage or disengage with the actuation member 103.

Note that in the example of FIG. 5 there is provided the - generally optional - gear 102, also in the form of a lever arm. The travel amplification element (gear, lever etc) can also be locked directly if the chosen design does not utilize a rack.

In the scenario of FIG. 5, the locking element 104 is in the locked state 281. Hence, the SMA element 101 is in the expanded state 201 and the actuation member 103 is in the first position 251.The SMA element 101 and the further SMA element 105 are configured as antagonistic wires; hence the further SMA element 105 is in the contracted state 212. The further SMA element 105 does not have to provide a biasing force to the SMA element 101, because the locking element 104 provides the stress relief to the further SMA element 105.

FIG. 6 also schematically illustrates aspects with respect to the locking element 104. Specifically, the scenario FIG. 6 corresponds to the scenario FIG. 5. However, in the scenario FIG. 6, SMA element 101 has transitioned into the contracted state 202. Likewise, the further SMA element 105 has transitioned into the expanded state 211. The lever arm of the gear 102 has rotated, and thereby displaced the actuation member 103 into the second position 252.

All this is facilitated by the release of the locking of the locking element 104, i.e., the respective lever arm implementing the locking element 104 disengaging from the actuation member 103. In other words, the locking element 104 is in the unlocked state 282 in FIG. 6.

In the scenario of FIG. 5 and FIG. 6, the SMA element 101 is used, both, to displace the actuation member 103, as well as to unlock the locking element 104. For this purpose, the SMA element 101 is arranged to release the locking of the locking element 104 upon a transition of the SMA element 101 from the expanded state 201 towards the contracted state 202. More specifically, as illustrated in FIG. 5 and FIG. 6, a first end 351 of the SMA element 101 is coupled to the actuation member 103 (in the illustrated example via the gear 102). An opposing second end 352 of the SMA element 101 is coupled with the locking element 104. The SMA element 101 has a U-shape. Then, when contraction of the SMA element 101 starts upon thermal activation thereof, the beginning contraction allows to disengage the lever arm of the locking element 104 from the rack implementing the actuation member 103. Further thermal activation of the SMA element 101 then results in further contraction of the SMA element 101 which is not, anymore, hindered by the locking of the actuation member 103.

To facilitate such a two-step approach where, in the first step, the locking element 104 is unlocked by the SMA element 101 and, in a second step, the actuation member 103 is displaced by the SMA element 101, it is possible to tailor the properties of the SMA element 101. For example, is illustrated in FIG. 5 and FIG. 6, the SMA element 101 may include multiple sections, e.g., a first section 301 adjacent to the first end 351, as well as the second section 302 adjacent to the second end 352. In the scenario of FIG. 5 and FIG. 6, the sections 301, 302 are at two sides of a pulley 310 of the U-shaped SMA element 101.

The sections 301, 302 can have different properties with respect to the thermal activation. For example, such different properties can be achieved by appropriate laser treatment of the material during manufacture. For example, the material composition can be altered. For example, if an alloy is used, the alloy composition can be altered. Specifically, it has been found that an implementation can be helpful in which the activation temperature of the SMA element 101 in the first section 301 is higher than the activation temperature of the SMA element 101 and the second section 302. In such a scenario, it is possible to coherently heat the SMA element 101. Then, initially, the activation temperature of the SMA element 101 in the second section 302 is crossed, which results in an unlocking of the locking element 104. Subsequently, the activation temperature of the SMA element 101 in the first section 302 is crossed, which results in displacement of the actuation member 103.

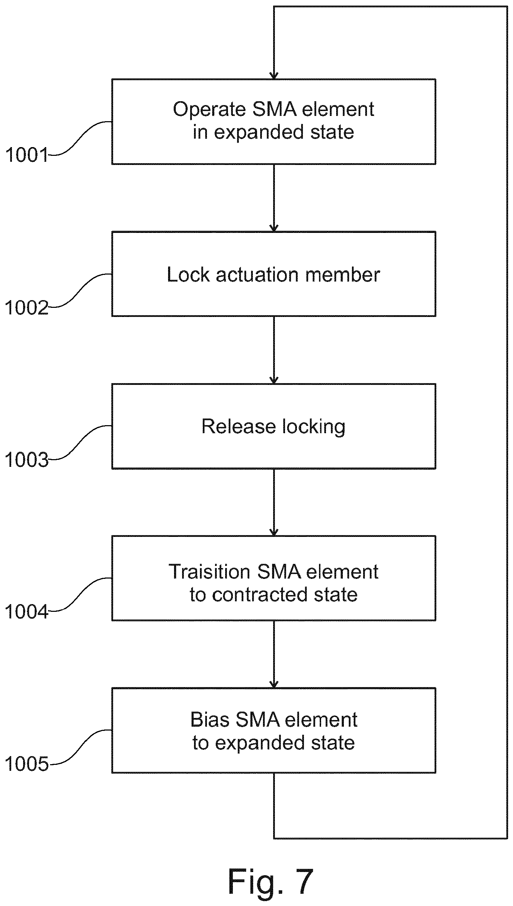

The function of the locking element 104 will be explained in greater detail in connection with the flowchart of FIG. 7.

FIG. 7 is a flowchart of a method according to an embodiment. Hereinafter, the method of FIG. 7 will be explained in connection with the actuator device 100 discussed above with respect to FIGs. 1 - 6. However, generally, the method of FIG. 7 can also be implemented using other kinds and types of actuator devices.

Initially, at block 1001, the SMA element 101 is operated in an expanded state 201 (cf. FIG. 5). Sometimes, this can be referred to as rest position or home position, because in the expanded state 201, there is no thermal activation and the SMA element 101 is in a low-energy state. Also, the expanded state 201 is associated with a first position 251 of the actuation member 103.

At block 1002, there is a locking of the actuation member 103. This also provides for a stress-relief of the further SMA element 105: specifically, even in view of ambient temperature variations, the further SMA element 105 does not have to provide excessive stress to effectively keep the SMA element 101 in the expanded state 201, even in view of rising ambient temperature. The further SMA element 105 may not be required to be heated while locking the actuation member 103. The further SMA element 105 does not need to provide a biasing force to the SMA element 101.

Then, at block 1003, the locking of the actuation member 103 is released. This can correspond to disengaging the locking element 104 from the actuation member 103. Then, the actuation member 103 is in principle free to displace from the first position 251 to the second position 252 (cf. FIG. 4).

According to some examples, it would be possible that said releasing of the locking of the actuation member 103 is achieved by means of the SMA element 101. In other examples, the releasing of the locking of the actuation member 103 may be achieved by another actuator module. For example, the actuator module may include a dedicated SMA element. Also, a magnetic or electrostatic drive would be conceivable.

Then, at block 1004, the SMA element 101 is transitioned into the contracted state 202, by means of thermal activation, i.e., heating of the SMA element 101. This results in a displacement of the actuation member 103 into the second position 252 (cf. FIG. 6). Also, the further SMA element 105 is expanded towards a respective expanded state 211; for this, the further SMA element 105 is not heated. The corresponding stress may only in significantly increase if the further SMA element 105 is operated in a plateau region 62. For example, the further SMA element 105 may expand by 2 to 6 percentage points upon transition of the SMA element 101 from the expanded state 201 to the contracted state 202. This expansion of the further SMA element 105, in other words, is achieved by a respective biasing force exerted by the SMA element 101 onto the further SMA element 105. For this transition, the biasing force exerted by the further SMA element 105 onto the SMA element 101 is, hence, smaller than the counter biasing force exerted by the SMA element 101 onto the further SMA element 105, e.g., not more than 80% or even not more than 40%. Thus, there is significant headroom for actuating the load.

At some point in time, thermal activation of the SMA element 101 can be stopped and then the further SMA element 105 can be heated. Also, thermal activation of the further SMA element 105 can be activated at least in some scenarios (sometimes, the further SMA element 105 can operate in the pseudo-elastic regime and here no thermal activation of the further SMA element 105 may be required): this increases the biasing force exerted by the further SMA element 105 onto the SMA element 101. Then, the SMA element 101 transitions into the expanded state 201, see block 1005.

Blocks 1004 and 1005 correspond to alternatingly heating the SMA element 101 and the further SMA element 105. For example, this functionality may be implemented using one or more limit switches and/or a bi-stable switch.

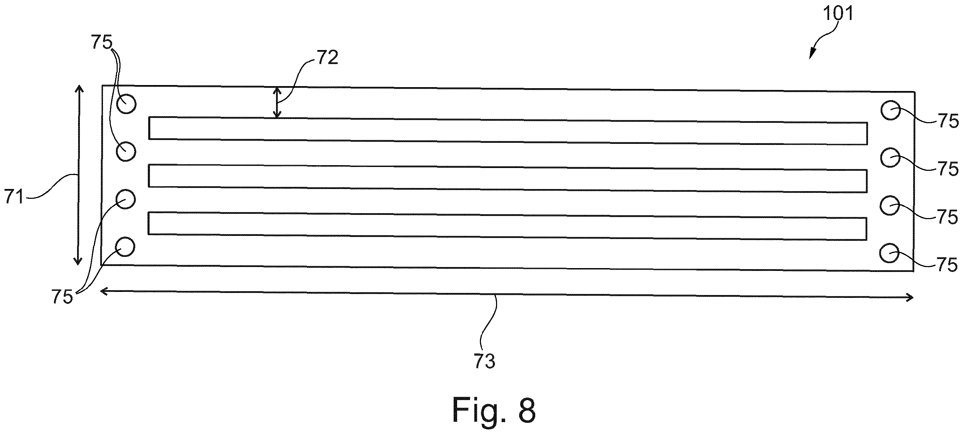

FIG. 8 illustrates aspects with respect to the implementation of the SMA element 101. In the example of FIG. 8, the SMA element 101 includes a count of four parallel SMA belts or sheets that have a flat longitudinal shape. The width 72 of the SMA sheets is illustrated. The overall width 71 of the SMA element 101 and the width 72 of the SMA sheets is dimensioned to provide for an inter-sheet gap. With this approach, heat exchange with the environment is facilitated during cooling, due to the increased surface area, when compared to a more traditional solution such as wires. The overall length 73 of the SMA element 101 is dimensioned to provide an appropriate stroke in view of the approximately 2 to 3 percentage points of strain change (cf. FIG. 2). The SMA element 101 also includes end connection 75 to be crimped or otherwise mechanically bonded. Soldering would be possible. The scenario of FIG. 8 is easily attachable.

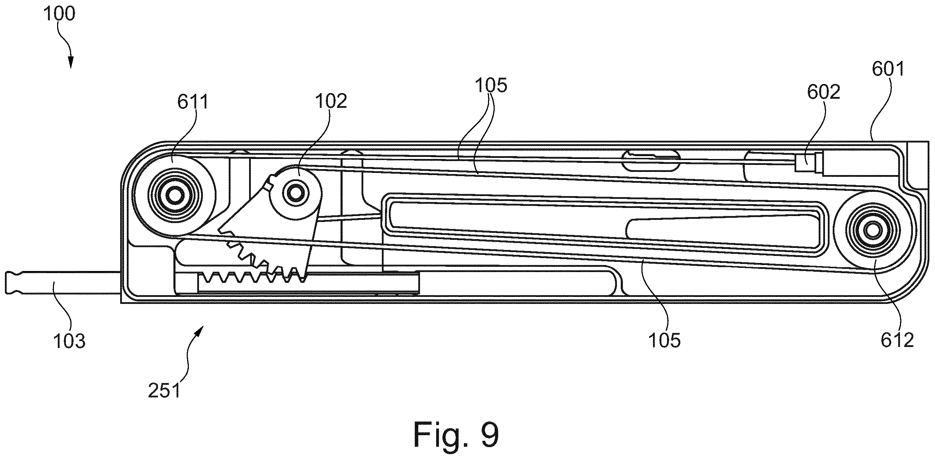

FIG. 9 schematically illustrates the actuator device 100 in an example implementation. The actuator device 100 includes a housing 601. In the view of FIG. 9, the further SMA element 105 is illustrated. The further SMA element 105, at one end, is crimped via an interface element 602 to the housing 601. By means of the interface element 602, a pretension can be applied to the further SMA element 105, to operate the latter in the plateau region 62 of the stress-strength characteristic 60 (cf. FIG. 2 for the SMA element 101 that is not shown in FIG. 9). As such, the interface element 602 acts as a biasing element. For instance, manufacturing tolerances may be adjusted by means of fine-tuning of the coupling at the interface element 602.

In the example of FIG. 9, two pulleys 611, 612 are used to provide for a longer length of the further SMA element 105. The further SMA element 105 is also attached to the lever arm implementing the gear 102. The lever arm of the gear 102 engages with the actuation member 103. In the scenario of FIG. 9, the rack implementing the actuation member 103 is in the first position 251 and the further SMA element 105 is in the contracted state 212 (the SMA element 101, obstructed from view in FIG. 9, is in the expanded state 201).

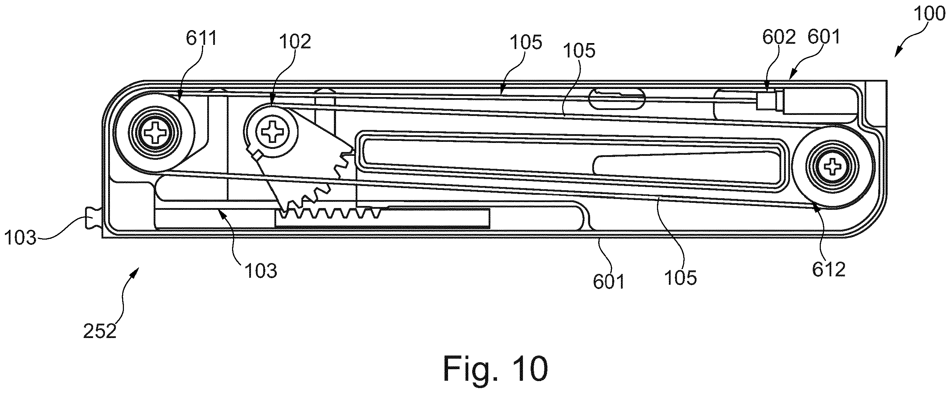

FIG. 10 schematically illustrates the actuator device 100 in the example implementation according to FIG. 9. In the example of FIG. 10, the further SMA element 105 is in the expanded state 211 (in the SMA element 101, obstructed from view in FIG. 10, is in the contracted state 202). The rack actuation member 103 has moved into the second position 252.

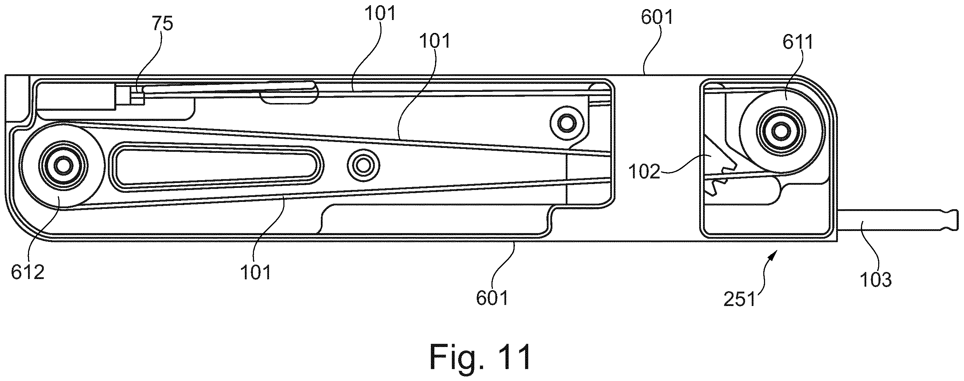

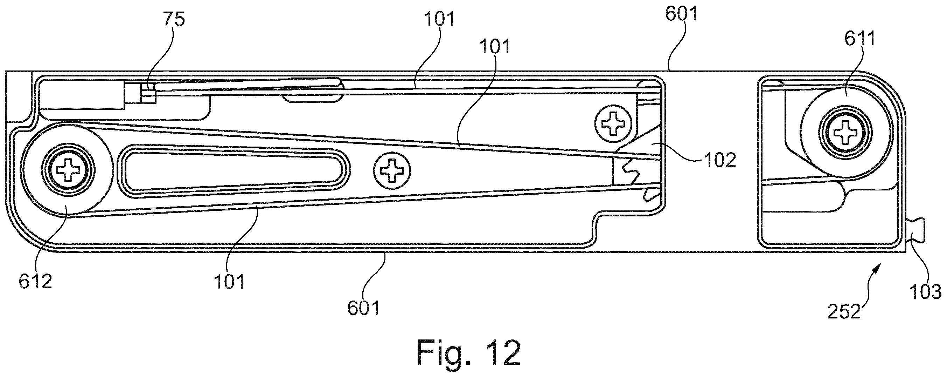

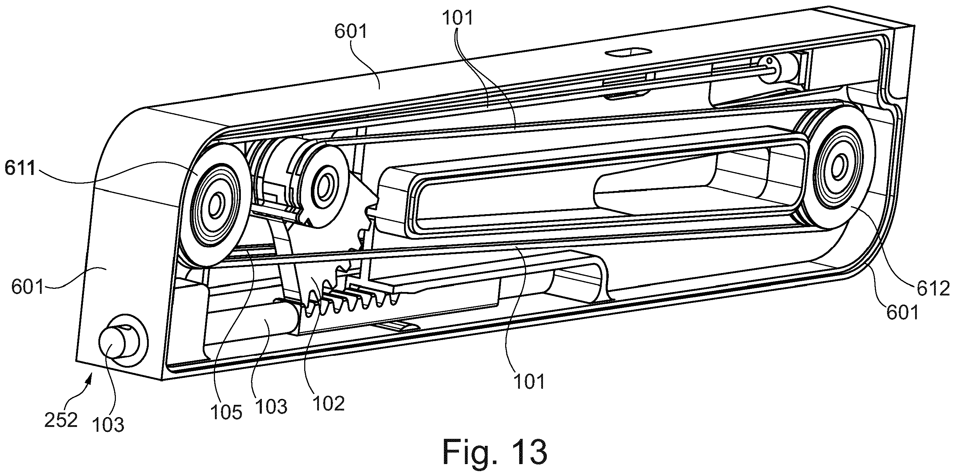

FIGs. 9 and 10 are top views of the actuator device 100. FIGs. 11 and 12 are bottom views of the same actuator device 100 according to the example implementation of FIGs. 9 and 10. In the views of FIGs. 11 and 12, the SMA element 101 is visible, while the further SMA element 105 is obstructed from view. FIG. 13 is a perspective view.

Summarizing, techniques have been described which provide for operating a mechanical actuator driven by one or more SMA elements. The ability to bring the system back into its original position is provided for by one or more further SMA elements.

The one or more SMA elements and/or the one or more further SMA elements can be manufactured or treated in a laser process.

A zero position is typically defined as a state in which the one or more SMA elements for driving the load is in the expanded state. To keep the one or more SMA elements in the expanded state, a mechanical locking element is used. System cool down is thereby supported.

According to some examples, the mechanical locking element is operated by the one or more SMA elements.

An example functional cycle is as follows: the one or more SMA elements engage a main gear when the one or more SMA elements are energized or, generally, thermally heated. Then, the one or more SMA elements transition into a contracted state and rotate the main gear. The main gear, in turn, engages a rack which transforms the rotation into a linear motion while pulling a specific load through a given displacement.

Once the actuation, i.e., the pulling action, is completed, the one or more further SMA elements can bring back the system into its original position, i.e., can bias the one or more SMA elements towards the elongated state ("return-to-home"). For this, it would be possible to heat the one or more further SMA elements. The main gear is rotated in a direction opposite to the direction used during actuation. Once the one or more SMA elements are back in the elongated state, the mechanical locking element is engaged and locks the main gear and the rack in the respective position, allowing for the one or more SMA elements and the one or more further SMA elements to cool down.

When a second actuation is desired, power is applied to the one or more SMA elements. According to some examples, a section of the one or more SMA element specifically treated to contract at a lower temperature, unlocks the locking element allowing the new cycle to begin. As the thermal activation continues, the one or more SMA elements transitioned to the contracted state to, again, pull the load.

Such a design allows for a significant reduction in mass, packaging (especially thickness) and a drastic reduction in noise (if compared to electromechanical actuators that produce a higher sound level). Such a design provides for noticeable advantages if compared to reference implementations using antagonistic wires. Specifically, the locking element allows to use a further SMA element at a lower plateau region stress. This is because the further SMA element does not have to keep the system and its zero position, but only bring it back to zero when thermally activated. The locking element will provide for the ability to keep the system in the zero position under all conditions, until unlocked. This results in a more load efficient system and a higher load capacity and improve power efficiency.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, various techniques have been described in which an elastic element to bias the SMA element into the expanded state is implemented by means of a further SMA element. In other examples, other kinds and types of elastic elements may be used to bias the SMA element into the expanded state, e.g., a compression spring.

For further illustration, various techniques have been described in which expansion/contraction of the SMA element results in a linear motion of an actuation member. Similar techniques may be applied in scenarios where the actuation member implements a rotational motion, e.g., using a pulley or the like.

## Claims

1. An actuator device (100), comprising:
- a shape memory alloy, SMA, element (101) configured to transition between an expanded state (201) and a contracted state (202),
- an actuation member (103) coupled to the SMA element (101) to displace between a first position (251) and a second position (252) when the SMA element (101) transitions between the expanded state (201) and the contracted state (202), and
- a locking element (104) configured to selectively lock the actuation member (103) in the first position (251) when the SMA element (101) is in the expanded state (201),
**characterized by**
- an elastic element (105) configured to bias the SMA element (101) towards the expanded state (201),
wherein the actuation member (103) is coupled with a first end (351) of the SMA element (101) and the locking element (104) is coupled with a second end (352) of the SMA element (101) such that the SMA element (101) is arranged to release the locking of the locking element (104) upon a transition of the SMA element (101) from the expanded state (201) towards the contracted state (202).

2. The actuator device (100) of claim 1,
wherein the locking element (104) is configured to selectively engage with the actuation member (103) when the SMA element (101) is in the expanded state (201), to thereby lock a position (251, 252) of the actuation member (103).

3. The actuator device (100) of claim 1 or claim 2,
wherein a first section (301) of the SMA element (101) next to the first end (351) has a first activation temperature,
wherein a second section (302) of the SMA element (101) next to the second end (352) has a second activation temperature,
wherein the second activation temperature is smaller than the first activation temperature.

4. The actuator device (100) of any one of the preceding claims
wherein the elastic element (105) comprises a further SMA element (105).

5. The actuator device (100) of claim 4,
wherein the further SMA element (105) is arranged in the actuator device (100) to operate in a pseudo-elastic regime.

6. The actuator device (100) of claim 4 or claim 5,
wherein the further SMA element (105), when not being thermally activated, is configured to exert a first biasing force (871) onto the actuation member (103),
wherein the SMA element (101), when being thermally activated, is configured to exert a second biasing force (872) onto the actuation member (103),
wherein the first biasing force (871) is not larger than 80% of the second biasing force (872), optionally not larger than 30%.

7. The actuator device (100) of any one of claims 4 to 6, further comprising:
- a control unit (151) configured to alternatingly heat the SMA element (101) and the further SMA element (105).

8. The actuator device (100) of any one of claims 4 to 7,
wherein the SMA element (101) and the further SMA element (105) are integrally formed.

9. The actuator device (100) of any one of the preceding claims,
wherein the actuation member (103) is coupled with the SMA element (101) via a gear (102) configured to translate a first stroke of the SMA element (101) by a first length into a second stroke of the actuation member (103), wherein the second stroke is larger than the first stroke.

10. The actuator device (100) of any one of the preceding claims,
wherein the locking element (104) is configured to provide stress relief to the elastic element (105) when locking the actuation member (103) in the first position (251).

11. The actuator device (100) of any one of the preceding claims,
wherein the SMA element (105) comprises multiple parallel SMA sheets.

12. A method of operating an actuator device (100) having an actuation member (103) displaced by a shape memory alloy, SMA, element (101) when the SMA element (101) transitions between an expanded state and a contracted state, comprising:
- operating the SMA element (101) in the expanded state (201),
- when the SMA element (101) is operated in the expanded state (201), locking the actuation member (103) with a locking element (104),
- releasing the locking of the actuation member (103) by unlocking the locking element (104),
- upon said releasing the locking of the actuation member (103), transitioning the SMA element (101) from the expanded state (201) to the contracted state, and
- biasing the SMA element (101) towards the expanded state (201) using an elastic element (105),
wherein the actuation member (103) is coupled with a first end (351) of the SMA element (101) and the locking element (104) is coupled with a second end (352) of the SMA element (101) such that the SMA element (101) releases the locking of the locking element (104) upon a transition of the SMA element (101) from the expanded state (201) towards the contracted state (202).

## Patentansprüche

1. Betätigungseinrichtung (100) umfassend:
- ein Formgedächtnislegierungs-, SMA-, Element (101), das so ausgestaltet ist, dass es zwischen einem expandierten Zustand (201) und einem kontrahierten Zustand (202) übergeht,
- ein Betätigungselement (103), das mit dem SMA-Element (101) gekoppelt ist, um zwischen einer ersten Stellung (251) und einer zweiten Stellung (252) verschoben zu werden, wenn das SMA-Element (101) zwischen dem expandierten Zustand (201) und dem kontrahierten Zustand (202) übergeht, und
- ein Fixierungselement (104), das ausgestaltet ist, um das Betätigungselement (103) selektiv in der ersten Stellung (251) zu fixieren, wenn sich das SMA-Element (101) in dem expandierten Zustand (201) befindet,
**gekennzeichnet durch**
- ein elastisches Element (105), das ausgestaltet ist, um das SMA-Element (101) zu dem expandierten Zustand (201) hin zu beeinflussen,
wobei das Betätigungselement (103) mit einem ersten Ende (351) des SMA-Elements (101) gekoppelt ist und das Fixierungselement (104) mit einem zweiten Ende (352) des SMA-Elements (101) gekoppelt ist, so dass das SMA-Element (101) angeordnet ist, um die Fixierung des Fixierungselements (104) bei einem Übergang des SMA-Elements (101) von dem expandierten Zustand (201) zu dem kontrahierten Zustand (202) zu lösen.

2. Betätigungseinrichtung (100) nach Anspruch 1,
wobei das Fixierungselement (104) ausgestaltet ist, um sich selektiv mit dem Betätigungselement (103) in Eingriff zu befinden, wenn sich das SMA-Element (101) in dem expandierten Zustand (201) befindet, um dadurch eine Stellung (251, 252) des Betätigungselements (103) zu fixieren.

3. Betätigungseinrichtung (100) nach Anspruch 1 oder Anspruch 2,
wobei ein erster Abschnitt (301) des SMA-Elements (101) neben dem ersten Ende (351) eine erste Aktivierungstemperatur aufweist,
wobei ein zweiter Abschnitt (302) des SMA-Elements (101) neben dem zweiten Ende (352) eine zweite Aktivierungstemperatur aufweist,
wobei die zweite Aktivierungstemperatur kleiner ist als die erste Aktivierungstem peratur.

4. Betätigungseinrichtung (100) nach einem der vorhergehenden Ansprüche, wobei das elastische Element (105) ein weiteres SMA-Element (105) umfasst.

5. Betätigungseinrichtung (100) nach Anspruch 4,
wobei das weitere SMA-Element (105) in der Betätigungseinrichtung (100) angeordnet ist, um in einem pseudoelastischen Bereich zu arbeiten.

6. Betätigungseinrichtung (100) nach Anspruch 4 oder Anspruch 5,
wobei das weitere SMA-Element (105), wenn es nicht thermisch aktiviert ist, ausgestaltet ist, um eine erste beeinflussende Kraft (871) auf das Betätigungselement (103) auszuüben,
wobei das SMA-Element (101), wenn es thermisch aktiviert ist, ausgestaltet ist, um eine zweite beeinflussende Kraft (872) auf das Betätigungselement (103) auszuüben,
wobei die erste beeinflussende Kraft (871) nicht größer als 80% der zweiten beeinflussende Kraft (872), optional nicht größer als 30%, ist.

7. Betätigungseinrichtung (100) nach einem der Ansprüche 4 bis 6, die darüber hinaus umfasst
- eine Steuereinheit (151), die ausgestaltet ist, um abwechselnd das SMA-Element (101) und das weitere SMA-Element (105) zu wärmen.

8. Betätigungseinrichtung (100) nach einem der Ansprüche 4 bis 7,
wobei das SMA-Element (101) und das weitere SMA-Element (105) ganzheitlich ausgebildet sind.

9. Betätigungseinrichtung (100) nach einem der vorhergehenden Ansprüche, wobei das Betätigungselement (103) mit dem SMA-Element (101) über ein Getriebe (102) gekoppelt ist, das ausgestaltet ist, um einen ersten Hub des SMA-Elements (101) um eine erste Länge in einen zweiten Hub des Betätigungselements (103) zu übersetzen, wobei der zweite Hub größer als der erste Hub ist.

10. Betätigungseinrichtung (100) nach einem der vorhergehenden Ansprüche, wobei das Fixierungselement (104) ausgestaltet ist, um das elastische Element (105) zu entlasten, wenn das Betätigungselement (103) in der ersten Stellung (251) fixiert ist.

11. Betätigungseinrichtung (100) nach einem der vorhergehenden Ansprüche, wobei das SMA-Element (105) mehrere parallele SMA-Schichten umfasst.

12. Verfahren zum Betreiben einer Betätigungseinrichtung (100) mit einem Betätigungselement (103), das durch ein Formgedächtnislegierungs-, SMA-, Element (101) verschoben wird, wenn das SMA-Element (101) zwischen einem expandierten Zustand und einem kontrahierten Zustand übergeht, umfassend:
- Betreiben des SMA-Elements (101) in dem expandierten Zustand (201),
- wenn das SMA-Element (101) in dem expandierten Zustand (201) betrieben wird, Fixieren des Betätigungselements (103) mit einem Fixierungselement (104),
- Lösen der Fixierung des Betätigungselements (103), indem das Fixierungselement (104) freigegeben wird,
- nach dem Lösen der Fixierung des Betätigungselements (103), Überführen des SMA-Elements (101) von dem expandierten Zustand (201) in den kontrahierten Zustand, und
- Beeinflussen des SMA-Elements (101) zu dem expandierten Zustand (201) hin unter Verwendung eines elastischen Elements (105),
wobei das Betätigungselement (103) mit einem ersten Ende (351) des SMA-Elements (101) gekoppelt ist und das Fixierungselement (104) mit einem zweiten Ende (352) des SMA-Elements (101) gekoppelt ist, so dass das SMA-Element (101) die Fixierung des Fixierungselements (104) bei einem Übergang des SMA-Elements (101) von dem expandierten Zustand (201) zu dem kontrahierten Zustand (202) löst.

## Revendications

1. Dispositif d'actionnement (100), comprenant:
- un élément (101) en alliage à mémoire de forme, SMA, configuré pour passer entre un état dilaté (201) et un état contracté (202),
- un élément d'actionnement (103) couplé à l'élément SMA (101) pour se déplacer entre une première position (251) et une deuxième position (252) lorsque l'élément SMA (101) passe entre l'état dilaté (201) et l'état contracté (202), et
- un élément de verrouillage (104) configuré pour verrouiller sélectivement l'élément d'actionnement (103) dans la première position (251) lorsque l'élément SMA (101) est dans l'état dilaté (201),
**caractérisé par**
- un élément élastique (105) configuré pour solliciter l'élément SMA (101) vers l'état dilaté (201),
dans lequel l'élément d'actionnement (103) est couplé à une première extrémité (351) de l'élément SMA (101) et l'élément de verrouillage (104) est couplé à une deuxième extrémité (352) de l'élément SMA (101) de sorte que l'élément SMA (101) est agencé pour libérer le verrouillage de l'élément de verrouillage (104) lors d'une transition de l'élément SMA (101) de l'état dilaté (201) vers l'état contracté (202).

2. Le dispositif d'actionnement (100) selon la revendication 1,
dans lequel l'élément de verrouillage (104) est configuré pour engager sélectivement avec l'élément d'actionnement (103) lorsque l'élément SMA (101) est dans l'état dilaté (201), afin de verrouiller une position (251, 252) de l'élément d'actionnement (103).

3. Le dispositif d'actionnement (100) selon la revendication 1 ou la revendication 2,
dans lequel une première section (301) de l'élément SMA (101) à côté de la première extrémité (351) a une première température d'activation,
dans lequel une deuxième section (302) de l'élément SMA (101) à côté de la deuxième extrémité (352) a une deuxième température d'activation,
dans lequel la seconde température d'activation est inférieure à la première température d'activation.

4. Le dispositif d'actionnement (100) selon l'une quelconque des revendications précédentes
dans lequel l'élément élastique (105) comprend un autre élément SMA (105).

5. Le dispositif d'actionnement (100) selon la revendication 4,
dans lequel l'autre élément SMA (105) est agencé dans le dispositif d'actionnement (100) pour fonctionner dans un régime pseudo-élastique.

6. Le dispositif d'actionnement (100) selon la revendication 4 ou la revendication 5,
dans lequel l'autre élément SMA (105), lorsqu'il n'est pas activé thermiquement, est configuré pour exercer une première force de sollicitation (871) sur l'élément d'actionnement (103),
dans lequel l'élément SMA (101), lorsqu'il est activé thermiquement, est configuré pour exercer une seconde force de sollicitation (872) sur l'élément d'actionnement (103),
dans lequel la première force de sollicitation (871) n'est pas supérieure à 80 % de la seconde force de sollicitation (872), facultativement pas supérieure à 30 %.

7. Le dispositif d'actionnement (100) selon l'une quelconque des revendications 4 à 6, comprenant en outre:
- une unité de commande (151) configurée pour chauffer alternativement l'élément SMA (101) et l'autre élément SMA (105).

8. Le dispositif d'actionnement (100) selon l'une quelconque des revendications 4 à 7,
dans lequel l'élément SMA (101) et l'autre élément SMA (105) sont formés intégralement.

9. Le dispositif d'actionnement (100) selon l'une quelconque des revendications précédentes,
dans lequel l'élément d'actionnement (103) est couplé avec l'élément SMA (101) par l'intermédiaire d'un engrenage (102) configuré pour transformer une première course de l'élément SMA (101) d'une première longueur en une seconde course de l'élément d'actionnement (103), dans lequel la seconde course est supérieure à la première course.

10. Le dispositif d'actionnement (100) selon l'une quelconque des revendications précédentes,
dans lequel l'élément de verrouillage (104) est configuré pour fournir un soulagement de contrainte à l'élément élastique (105) lors du verrouillage de l'élément d'actionnement (103) dans la première position (251).

11. Le dispositif d'actionnement (100) selon l'une quelconque des revendications précédentes,
dans lequel l'élément SMA (105) comprend plusieurs feuilles SMA parallèles.

12. Procédé d'actionnement d'un dispositif d'actionnement (100) comportant un élément d'actionnement (103) déplacé par un élément (101) en alliage à mémoire de forme, SMA, lorsque l'élément SMA (101) passe entre un état dilaté et un état contracté, comprenant:
- faire fonctionner l'élément SMA (101) dans l'état dilaté (201),
- lorsque l'élément SMA (101) fonctionne dans l'état dilaté (201), verrouiller l'élément d'actionnement (103) avec un élément de verrouillage (104),
- relâcher le verrouillage de l'élément d'actionnement (103) en déverrouillant l'élément de verrouillage (104),
- lors dudit relâchement du verrouillage de l'élément d'actionnement (103), faire passer l'élément SMA (101) de l'état dilaté (201) à l'état contracté, et
- solliciter l'élément SMA (101) vers l'état dilaté (201) en utilisant un élément élastique (105),
dans lequel l'élément d'actionnement (103) est couplé avec une première extrémité (351) de l'élément SMA (101) et l'élément de verrouillage (104) est couplé avec une deuxième extrémité (352) de l'élément SMA (101) de sorte que l'élément SMA (101) relâche le verrouillage de l'élément de verrouillage (104) lors d'une transition de l'élément SMA (101) de l'état dilaté (201) vers l'état contracté (202).
